# EUROPEAN PATENT APPLICATION

(11) **EP 2 472 182 A2**
(43) Date of publication of application: **04.07.2012**
(21) Application number: 11194559.8
(22) Date of filing: 20.12.2011
(51) Int. Cl.: F23R 3/14, F23R 3/28

(54) **Sculpted trailing edge swirler combustion premixer and method**

(30) Priority: 30.12.2010 IT CO20100069
(71) Applicant: Nuovo Pignone S.p.A., 50127 Florence (IT)
(72) Inventor: Evulet, Andrei Tristan, 50127 Florence (IT)
(74) Representative: Illingworth-Law, William Illingworth

(57) **Abstract**

Methods and devices useable in turbo-engines premixing of compressed air and fuel are provided. A premixer has a mixing part configured to receive a gas flow input in a flow direction and fluid fuel injected substantially perpendicular to the flow direction. The mixing part has a rim configured to define a substantially cylindrical shape. The mixing part also has a swirler with (i) a center body located substantially in a middle of the cylindrical shape along the flow direction, and (ii) a set of vanes extending from the center body towards the rim, the vanes being configured to determine a rotation motion inside a flow that includes the received gas flow and the injected fuel when the flow passes through the mixing part, at least some of the vanes having a trailing edge with a waving profile configured to generate mixing zones inside the flow thereafter.

## Description

### BACKGROUND

### TECHNICAL FIELD

Embodiments of the subject matter disclosed herein generally relate to methods and systems used to generate a substantially uniform compressed air-fuel mixture used in a turbo-compressor engine, and, more particularly, to a swirler having a set of vanes with sculpted trailing edges.

### DISCUSSION OF THE BACKGROUND

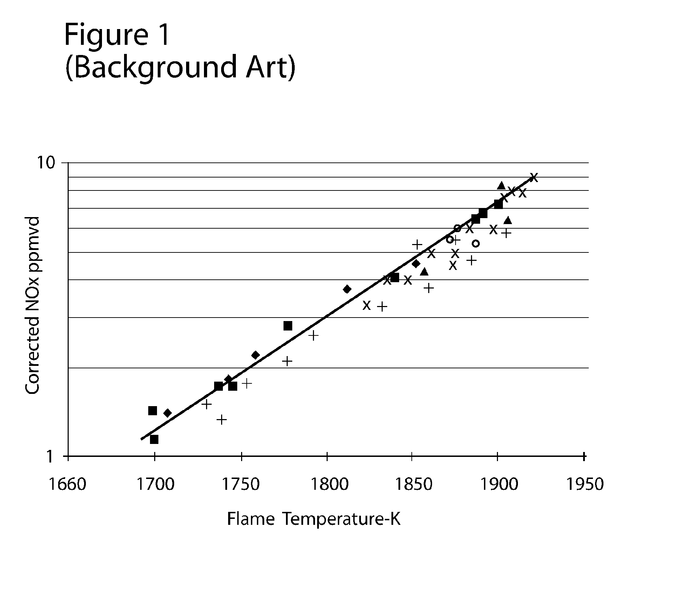

Atmospheric pollution concerns have led worldwide to stricter emissions standards requiring significant reductions in gas turbine emissions, for industrial and power generation as well as propulsion applications. Nitrogen Oxides (NOx) are among the major pollutants produced by human activity. The NOx are generally formed in high temperature regions of flames in gas turbine engines. Lowering the flame temperatures leads to a reduction of the NOx emissions. For example, Figure 1 is a graph illustrating the correlation between an amount of NOx emissions and the temperature of the flame. The amount of NOx on the y-axis of the graph is expressed in parts-per-million by volume (ppmvd) corrected for 15% O₂. (For aircraft propulsion systems the similar NOx emissions are reported per mass unit of liquid fuel used.) The flame temperature on the x-axis is in Kelvin degrees (K). The points represent data taken over a wide range of test conditions, but illustrate the correlation between the amount of NOx emission and the flame temperature.

Well-established techniques of reducing a flame temperature include injecting high purity water or steam in a combustor and using a selective catalytic reduction. However, both these techniques, generically named wet low NOx techniques, require extensive use of ancillary equipment, which results in increasing the cost of energy production. Additionally, the space required for using these techniques is a problem in aero-derivative engines as well as in aircraft engines.

Aero-derivative engines are frequently used on oil and gas platforms used for exploration and exploitation of subsea reservoirs. These engines may be seen as modified aircraft engines, which instead of being used for propulsion are used to generate mechanical drive for oil and gas pumps or as power generators. The aero-derivative engines are used on oil and gas platforms because of their high power and efficiency as well as compactness. The aero-derivative engines are typically modified to use natural gas as fuel (instead of liquid fuel), but liquid fuel could also be used as backup fuel.

From a historical perspective, flames in engines used to be diffusion flames with a localized hot spots having adiabatic flame temperature. The diffusion flames yield NOx amounts of hundreds of ppm and are very stable. In contrast, some current pollution regulations require the amount of NOx to be no larger than 5 ppm.

Another known method of reducing the temperature of the flame and consequently the NOx emissions is mixing uniformly fuel and compressed air before the burning. In a diffusion flame there are regions having different proportions of fuel and air, for example characterized by stoichiometry ratios of 0.1, 1, 2, and 5. In contrast, by using a premixer, a constant stoichiometry ratio of 0.5 may be achieved. In other words, the non-uniformity of the air-fuel mixture causes the flame to be locally hotter. Using a uniform mixture of fuel and compressed air technology is known as dry low NOx. A premixer which is traditionally placed between a compressor and a turbine may be configured to achieve a uniform mixture of compressed air and fuel. The premixer may be part of a combustor.

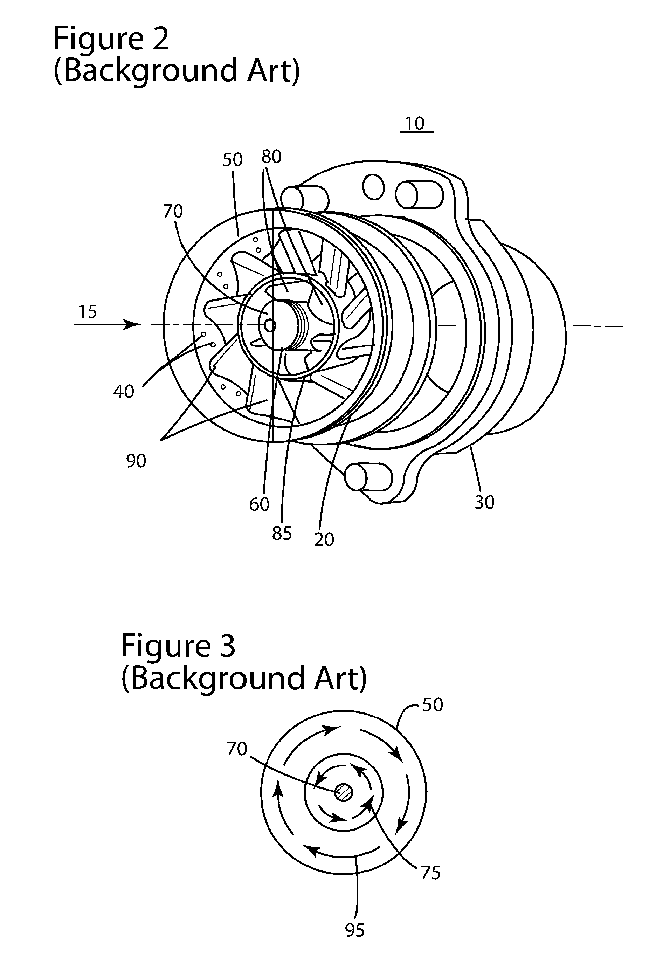

An exploded view of a conventional aero-derivative premixer 10 is illustrated in Figure 2. The compressed air produced by a compressor flows into the premixer 10 in a flow direction 15. The premixer 10 includes a mixing part 20 and a shroud 30. The mixing part 20 and the shroud 30 are configured to engage with each other.

The fuel is injected radially in the mixing part 20 through fuel orifices (nozzles) 40 located on a rim 50 of the mixing part 20. Inside the mixing part 20, a double annular counter rotating swirler 60 has a center body 70 and two sets of vanes 80 and 90 separated by an intermediate rim 85. The vanes 80 form an inner swirler configured to direct a flow passing therethrough such as to generate an inner rotation in a plane perpendicular to the flow direction 15. The vanes 90 form a counter-rotating swirler configured to direct a flow passing therethrough such as to generate an outer rotation in the plane perpendicular to the flow direction 15, the outer rotation being opposite to the inner rotation. Consequently, after passing through the double annular counter rotating swirler 60, there are two flows 75 and 95 having opposite in-plane rotations as illustrated in Figure 3. A high turbulence occurs at the shear layer between the flows causing a rapid and uniform mixing of the compressed air and the fuel. As the two flows advance in the flow direction the mixing spreads radially from approximately a position of the intermediate rim 85 towards a center and an outside.

The double annular counter rotating conventional swirler 60 has a complicated geometry, is expensive to manufacture and hard to control from a fluid dynamics perspective since turbulence is generally a violent unstable phenomenon.

Accordingly, it would be desirable to provide a cheaper premixer with improved performances.

### SUMMARY

According to one exemplary embodiment, a premixer has a mixing part configured to receive a gas flow input in a flow direction and fluid fuel injected substantially perpendicularly to the flow direction. The mixing part includes a rim configured to define a substantially cylindrical shape and a swirler with (i) a center body located substantially in a middle of the cylindrical shape along the flow direction, and (ii) a set of vanes extending from the center body towards the rim, the vanes being configured to determine a rotation motion inside a flow that includes the received gas flow and the injected fuel when the flow passes through the mixing part, at least some of the vanes having a trailing edge with a waving profile configured to generate mixing zones inside the flow thereafter.

According to another exemplary embodiment, a turbo-engine has a compressor configured to compress a gas flow passing therethrough, a turbine configured to receive a gaseous mixture flow, and a premixer located between the compressor and the turbine, and configured to mix the compressed gas exiting the compressor and fluid fuel to yield the gaseous mixture, and to output the gaseous mixture towards the turbine. The premixer has a mixing part configured to receive the compressed gas input in a flow direction and the fuel injected substantially perpendicular to the flow direction. The mixing part includes a rim configured to define a substantially cylindrical shape and a swirler with (i) a center body located substantially in a middle of the cylindrical shape along the flow direction, and (ii) a set of vanes extending from the center body towards the rim, the vanes being configured to determine a rotation motion inside the gaseous mixture, when the gaseous mixture passes through the mixing part. At least some of the vanes have a trailing edge with a waving profile configured to generate mixing zones inside the flow thereafter.

According to another exemplary embodiment, a method of manufacturing a premixer is provided. The method includes mounting vanes around a center body located substantially in a middle of a rim having a cylindrical shape, , fuel orifices being located on at least one of the rim and the center body and being configured to inject fluid fuel radially. The vanes extend from the center body towards the rim, and are configured to determine a rotation motion inside a flow passing through the mixing part, at least some of the vanes having a trailing edge with a waving profile. The method further includes mounting the rim with the center body and the vanes inside a first end of a shroud, to form a duct between the rim and a second of the shroud.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a graph illustrating a correlation between an amount of NOx emissions and a temperature of a flame;
Figure 2 is an exploded view of a conventional premixer;
Figure 3 is a schematic illustration of rotation speeds inside a conventional premixer after a double annular swirl;
Figure 4 is a schematic diagram of a turbo-engine according to an exemplary embodiment;
Figure 5 is an exploded view of a premixer according to an exemplary embodiment;
Figure 6 is a schematic illustration of rotation speeds in the premixer after a swirl according to an exemplary embodiment;
Figure 7 is a schematic representation of a vane according to an exemplary embodiment;
Figure 8 is a cross-section including a flow direction of a premixer according to an exemplary embodiment;
Figure 9 is a schematic representation of a vane position relative to a flow direction according to an exemplary embodiment; and

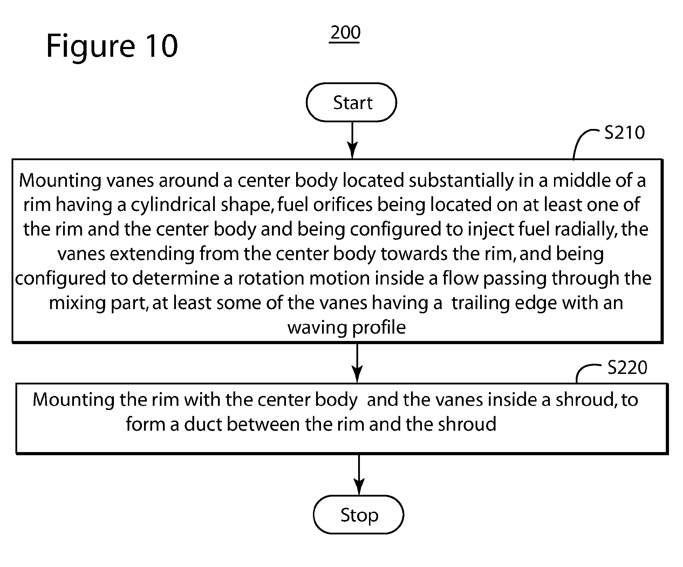

Figure 10 is a flow chart of a method for manufacturing a premixer according to an exemplary embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of premixers used in aero-derivative engines. However, the embodiments to be discussed next are not limited to these systems, but may be applied to other systems that require achieving a uniform mixture of gases.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

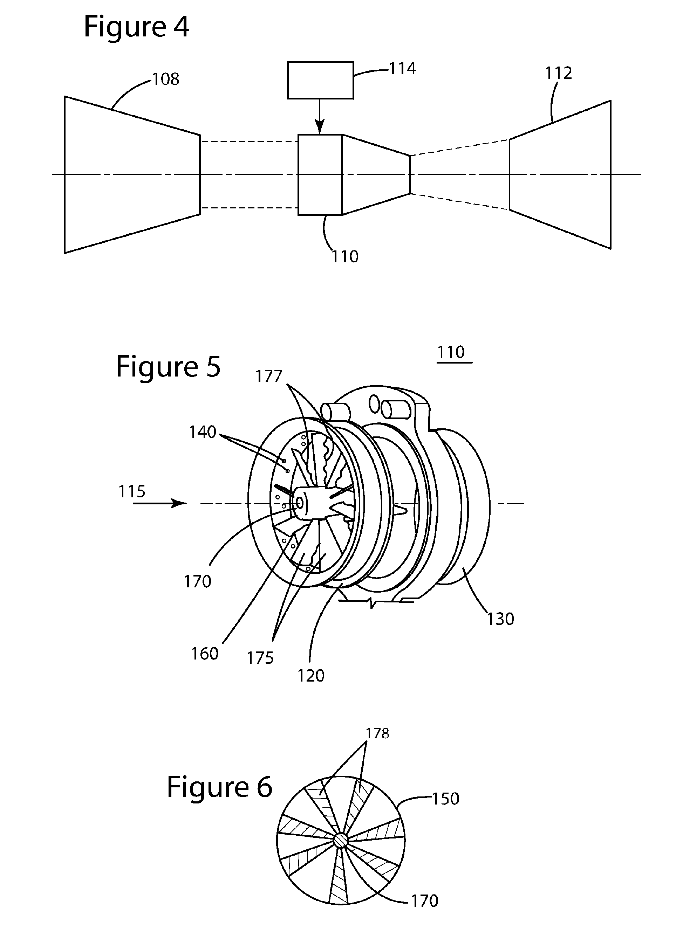

A turbo-engine 100 generally includes a compressor 108, a premixer 110, and a turbine 112, as schematically represented in Figure 4. Although a single premixer 110 is illustrated and discussed hereinafter, it is known in the art that multiple premixers may be placed between the compressor 108 and the turbine 112. The premixer 110 may be part of a combustor configured to initiate and host the flame, for example, in a combustion chamber. However, the burning may alternatively take place inside the turbine 112. An exact location of the burning is not relevant or limiting for the embodiments discussed hereinafter. Air or another gas including oxygen (for simplicity referred to as air in the following description) is compressed in the compressor 105, mixed with fuel received from a supply 114 in the premixer 110, burned to generate hot, high-pressure gases which are then expanded in the turbine 112. In Figure 2, transition from the compressor 108 to the premixer 110 and then to the turbine 112 are represented using dashed lines as other components may exist in-between. The fuel may be in a gaseous form (e.g., natural gas) or in a liquid form, and, thus, may be characterized as being fluid fuel.

Figure 5 is an exploded view of the premixer 110 according to an embodiment. The compressed air produced by the compressor 108 enters the premixer 110 along a flow direction 115. The premixer 110 includes a mixing part 120 and a shroud 130 configured to engage with each other. For example, the shroud 130 may receive at least partially the mixing part 120 therein.

The mixing part 110 includes a swirler 160 having a simpler geometry than the conventional swirler 60, thereby, being easier and cheaper to manufacture. The premixer 110 also achieves better control of the flow dynamics and improved mixing efficiency compared to the conventional premixer 10.

The mixing part 120 has a substantially cylindrical shape, the flow direction 115 being substantially parallel with a central axis of the cylindrical shape. Fuel is injected radially inside the mixing part 120 through fuel orifices (nozzles) 140 located on a rim 150 of the mixing part 120. Inside the mixing part 120, the swirler 160 has a center body 170 located substantially in a middle of the cylindrical shape along the longitudinal axis of the cylindrical shape. A set of vanes 175 is attached to and extending from the center body 170 towards the rim 150. In one application, there is no additional set of vanes for premixing the fuel, i.e., the set of vanes is a single set of vanes.

The fuel orifices 140 may be located at substantially equal distances around the rim 150, between radial positions of the vanes. In Figure 6, pairs of fuel orifices 140 are located a predetermined distance in-between, at different positions in the flow direction. In alternative embodiments, the fuel may be injected from the center body 170 or both from the center body 170 and the rim 150. Thus, the fuel is injected radially, while the compressed air flows longitudinally.

The vanes 175 are configured to determine a rotation motion inside the flow passing through the mixing part 120, each of the vanes 175 having a sculpted trailing edge 177 configured to generate mixing zones 178 in which a rotation speed varies in the flow as illustrated in Figure 6. Thus, a mixing zone 178 occurs behind each of the vanes 175 in the flow direction 115, the presence of these mixing zones causing a rapid and uniform mixing of the compressed air and the fuel. In contrast, to the turbulence occurring at a shear surface between counter-rotating flows after a conventional double annular swirl, in the present mixing zones are created variations of the rotating speeds favoring mixing but in a less violent manner. After the swirl 160, a mixing initiated in the mixing zones expands throughout the volume due to an ongoing rotation motion in the flow.

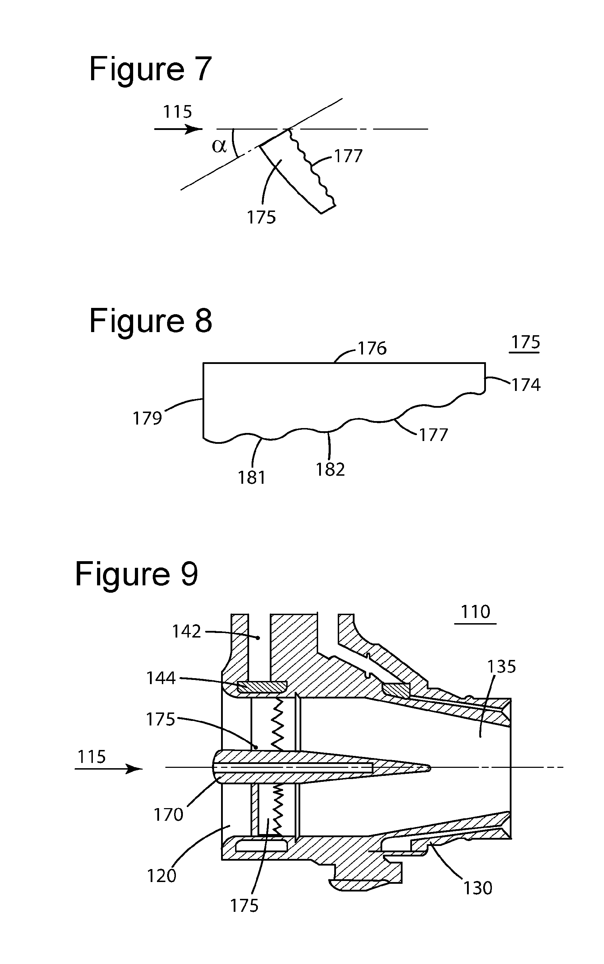

Figure 7 illustrates one embodiment of a vane 175 according to an exemplary embodiment. The vane is attached to the center body 170 on a side 179, the other side 174 facing the rim 150. A leading side 176 first encountered by the compressed air flow is smooth, while the trailing side 177 has a serpentine shape (i.e., waving profile) forming teeth extending in the flow direction 115. According to another embodiment, among neighboring teeth, one tooth (e.g., 181) may be bended upwards relative to the vane's plane, while a neighboring one may be bended downwards relative to the vane's plane. The side 179 of the vane 175 (where the vane is attached to the center body) may be larger than the opposite side 174. The vanes 175 may be manufactured using a direct laser manufacturing sintering (DLMS) method. Solidity or number of vanes per annulus area is according to current practice known in the art.

Figure 8 is a cross-section of the premixer 110 including the flow direction 115. The vanes 175 may be attached at substantially equal radial distanced around the center body 170. A plane of an attached vane 175 makes an angle α (less that 45°) with the flow direction 115 as detailed in Figure 9. However, the vanes may have a more complex three-dimensional shape to have a varying angle relative to the flow direction 115.

Fuel orifices 140 positioned at different locations along the flow direction between the same vanes may be arranged to mimic the vanes angle. For example, if only two nozzles are considered a line connecting the two nozzles makes the same angle with the flow direction as the plane of the vanes.

The center body 170 extends inside a duct 135 inside the shroud 130. Due to the narrowing cross section of the duct 135 in the flow direction 115, the air-fuel mixture exiting the mixing part 120 is accelerated. The resulting increase of the speed of the air-fuel mixture in the flow direction 115 achieves a desired objective, that is, keeping the flame outside the duct 135.

The fuel may be brought to the mixing part 120 through a pipe 142 and may fill a duct 144 formed between the mixing part 120 and the shroud 130.

A premixer (11) may be manufactured using method 200 whose flow chart is illustrated in Figure 9. At S210, the method 200 includes mounting vanes (e.g., 175) around a center body (e.g., 170) located substantially in a middle of a rim (e.g., 150) having a cylindrical shape, the vanes (e.g., 175) extending from the center body (e.g., 170) towards the rim (e.g., 150), and being configured to determine a rotation motion inside a flow passing through the mixing part (e.g., 120), at least some of the vanes (e.g., 175) having a trailing edge (e.g., 177) with an waving profile. The method 200, further includes, at S220, mounting the rim (e.g., 150) with the center body (e.g., 170) and the vanes (e.g., 175) inside a shroud (e.g., 130), to form a duct (e.g., 144) between the rim (e.g., 150) and the shroud (e.g., 130), the rim (e.g., 150) having fuel orifices (e.g., 140) configured to enable fuel to be provided from the duct (e.g., 144) through the rim (e.g., 150) towards the center body (e.g., 170).

The method 200 may also include removing pre-existing vanes from the center body before mounting the vanes. In other words, a swirler of a conventional premixer (e.g., 10) can be modified into a swirler similar to the swirler 160.

The disclosed exemplary embodiments provide a swirler useable in an aero-derivative engine on a gas and oil platform, the swirler having a simplified geometry compared with the conventional double annular swirler. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

Various aspects and embodiments of the present invention are defined by the following numbered clauses:
1. A premixer comprising:
   a mixing part configured to receive a gas flow input in a flow direction and fluid fuel injected substantially perpendicularly to the flow direction, the mixing part including:
      a rim configured to define a substantially cylindrical shape, and
      a swirler with (i) a center body located substantially in a middle of the cylindrical shape along the flow direction, and (ii) a set of vanes extending from the center body towards the rim, the vanes being configured to determine a rotation motion inside a flow that includes the received gas flow and the injected fuel when the flow passes through the mixing part, at least some of the vanes having a trailing edge with a waving profile configured to generate mixing zones inside the flow thereafter.
2. The premixer of clause 1, wherein neighboring teeth formed by the waving profile are bent in opposite directions relative to a plane of the vane.
3. The premixer of clause 1 or clause 2, wherein each vane has a shape that narrows from the center body towards the rim.
4. The premixer of any preceding clause, wherein the vanes are located at substantially equal angles around the center body.
5. The premixer of any preceding clause, wherein the vanes are attached to the center body to make a predetermined angle with the flow direction.
6. The premixer of any preceding clause, wherein at least two fuel orifices are located at different positions along the flow directions between neighboring vanes.
7. The premixer of any preceding clause, wherein
   fuel is injected through fuel orifices located on at least one of the rim and center body.
8. The premixer of any preceding clause, further comprising:
   a shroud configured to receive the mixing part, the shroud being located after the mixing part along the flow direction, and being configured to accelerate the flow exiting the mixing part.
9. The premixer of any preceding clause, wherein the shroud has an inner duct with a narrowing cross-section along the fluid flow direction.
10. The premixer of any preceding clause, wherein the center body extends into the shroud.
11. The premixer of any preceding clause, wherein the swirler includes only one set of vanes.
12. A turbo-engine, comprising:
   a compressor configured to compress a gas passing therethrough;
   a turbine configured to receive a gaseous mixture; and
   a premixer located between the compressor and the turbine, and configured to mix the compressed gas exiting the compressor and fluid fuel to yield the gaseous mixture, and to output the gaseous mixture towards the turbine, the premixer including a mixing part configured to receive the compressed gas input in a flow direction and the fuel injected substantially perpendicular to the flow direction, the mixing part including:
      a rim configured to define a substantially cylindrical shape, and
      a swirler with (i) a center body located substantially in a middle of the cylindrical shape along the flow direction, and (ii) a set of vanes extending from the center body towards the rim, the vanes being configured to determine a rotation motion inside the gaseous mixture, when the gaseous mixture passes through the mixing part, at least some of the vanes having a trailing edge with a waving profile configured to generate mixing zones inside the gaseous mixture flow thereafter.
13. The turbo-engine of any preceding clause, wherein the swirler includes only one set of vanes.
14. The turbo-engine of v, wherein neighboring teeth formed by the waving profile are bent in opposite directions relative to a plane of the vane.
15. The turbo-engine of any preceding clause, wherein each vane has a shape that narrows from the center body towards the rim.
16. The turbo-engine of any preceding clause, wherein the fuel is injected through fuel orifices located on at least one of the rim and the center body.
17. The turbo-engine of any preceding clause, wherein the vanes are attached to the center body to make a predetermined angle with the flow direction.
18. The turbo-engine of any preceding clause, wherein the turboengine is an aero-derivative engine.
19. A method of manufacturing a premixer, comprising:
   mounting vanes around a center body located substantially in a middle of a rim having a cylindrical shape, fuel orifices being located on at least one of the rim and the center body and being configured to inject fluid fuel radially, the vanes extending from the center body towards the rim, and being configured to determine a rotation motion inside a flow passing through the mixing part, at least some of the vanes having a trailing edge with a waving profile; and
   mounting the rim with the center body and the vanes inside a first end a shroud, to form a duct between the rim and a second end of the shroud.
20. The method of clause 19, further comprising:
   removing pre-existing vanes from the center body before mounting the vanes.

## Claims

1. A premixer (110) comprising:
a mixing part (120) configured to receive a gas flow input in a flow direction (115) and fluid fuel injected substantially perpendicularly to the flow direction (115), the mixing part (120) including:
a rim (150) configured to define a substantially cylindrical shape, and
a swirler (160) with (i) a center body (170) located substantially in a middle of the cylindrical shape along the flow direction (115), and (ii) a set of vanes (175) extending from the center body (170) towards the rim (150), the vanes (175) being configured to determine a rotation motion inside a flow that includes the received gas flow and the injected fuel when the flow passes through the mixing part (120), at least some of the vanes (175) having a trailing edge (177) with a waving profile configured to generate mixing zones (178) inside the flow thereafter.

2. The premixer of claim 1, wherein neighboring teeth formed by the waving profile are bent in opposite directions relative to a plane of the vane.

3. The premixer of claim 1 or claim 2, wherein each vane has a shape that narrows from the center body towards the rim.

4. The premixer of any preceding claim, wherein the vanes are located at substantially equal angles around the center body.

5. The premixer of any preceding claim, wherein the vanes are attached to the center body to make a predetermined angle with the flow direction.

6. The premixer of any preceding claim, wherein at least two fuel orifices are located at different positions along the flow directions between neighboring vanes.

7. The premixer of any preceding claim, wherein
fuel is injected through fuel orifices located on at least one of the rim and center body.

8. The premixer of any preceding claim, further comprising:
a shroud configured to receive the mixing part, the shroud being located after the mixing part along the flow direction, and being configured to accelerate the flow exiting the mixing part.

9. The premixer of any preceding claim, wherein the shroud has an inner duct with a narrowing cross-section along the fluid flow direction.

10. The premixer of any preceding claim, wherein the center body extends into the shroud.

11. The premixer of any preceding claim, wherein the swirler includes only one set of vanes.

12. A turbo-engine (100), comprising:
a compressor (108) configured to compress a gas passing therethrough;
a turbine (112) configured to receive a gaseous mixture; and
a premixer (110) located between the compressor (108) and the turbine (112), and configured to mix the compressed gas exiting the compressor (108) and fluid fuel to yield the gaseous mixture, and to output the gaseous mixture towards the turbine (112), the premixer (110) including a mixing part (120) configured to receive the compressed gas input in a flow direction (115) and the fuel injected substantially perpendicular to the flow direction (115), the mixing part (120) including:
a rim (150) configured to define a substantially cylindrical shape, and
a swirler (160) with (i) a center body (170) located substantially in a middle of the cylindrical shape along the flow direction (115), and (ii) a set of vanes (175) extending from the center body (170) towards the rim (150), the vanes (175) being configured to determine a rotation motion inside the gaseous mixture, when the gaseous mixture passes through the mixing part (120), at least some of the vanes (175) having a trailing edge (177) with a waving profile configured to generate mixing zones (178) inside the gaseous mixture flow thereafter.

13. The turbo-engine of claim 12, wherein the swirler includes only one set of vanes.

14. The turbo-engine of claim 12 or claim 13, wherein neighboring teeth formed by the waving profile are bent in opposite directions relative to a plane of the vane.

15. A method (200) of manufacturing a premixer (110), comprising:
mounting (S210) vanes (175) around a center body (170) located substantially in a middle of a rim (150) having a cylindrical shape, fuel orifices (140) being located on at least one of the rim (150) and the center body (170) and being configured to inject fluid fuel radially, the vanes (175) extending from the center body (170) towards the rim (150), and being configured to determine a rotation motion inside a flow passing through the mixing part (120), at least some of the vanes (175) having a trailing edge (177) with a waving profile; and
mounting (S220) the rim (150) with the center body (170) and the vanes (175) inside a first end a shroud (130), to form a duct (144) between the rim (150) and a second end of the shroud (130).
